(19) Europäisches Patentamt
European Patent Office
Office européen des brevets

(11) EP 4 421 140 A1

(12) EUROPEAN PATENT APPLICATION
published in accordance with Art. 153(4) EPC

(43) Date of publication:
**28.08.2024 Bulletin 2024/35**

(21) Application number: **23822772.2**

(22) Date of filing: **14.04.2023**

(51) International Patent Classification (IPC):
***C09J 127/14*** (2006.01) ***C08F 114/22*** (2006.01)
***C08F 14/22*** (2006.01) ***C08F 214/22*** (2006.01)

(52) Cooperative Patent Classification (CPC):
**C08F 14/22; C08F 114/22; C08F 214/22; C09J 127/14**

(86) International application number:
**PCT/CN2023/088512**

(87) International publication number:
**WO 2023/241201 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.06.2022 PCT/CN2022/099187**
**30.08.2022 CN 202211044631**
**30.08.2022 CN 202211052014**
**30.08.2022 CN 202211046282**
**30.08.2022 CN 202211043966**
**30.08.2022 CN 202211044756**

(71) Applicant: **Contemporary Amperex Technology Co., Limited**
**Ningde, Fujian 352100 (CN)**

(72) Inventors:
- **LI, Cheng**
  **Ningde, Fujian 352100 (CN)**
- **ZENG, Zipeng**
  **Ningde, Fujian 352100 (CN)**
- **LIU, Huihui**
  **Ningde, Fujian 352100 (CN)**
- **WANG, Jingming**
  **Ningde, Fujian 352100 (CN)**

(74) Representative: **Kraus & Lederer PartGmbB**
**Thomas-Wimmer-Ring 15**
**80539 München (DE)**

(54) **BINDER COMPOSITION, POSITIVE ELECTRODE PLATE, SECONDARY BATTERY AND ELECTRIC DEVICE**

(57) This application provides a binder composition. The binder composition includes a first fluoropolymer and a second fluoropolymer, where the first fluoropolymer includes polyvinylidene fluoride with a weight-average molecular weight of 5000000-9000000, and a weight-average molecular weight of the second fluoropolymer is not greater than 600000. Featuring good processability, this binder composition, even added in small amounts, can provide electrode plates with great adhesion force and improve the cycling performance of a battery.

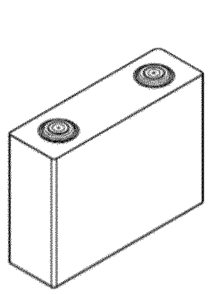


FIG. 1

EP 4 421 140 A1

## Description

### CROSS-REFERENCE TO RELATED APPLICATIONS

This application refers to PCT Patent Application No. PCT/CN2022/099187, filed on June 16, 2022 and entitled "BINDER AND PREPARATION METHOD AND APPLICATION THEREOF", CN Patent Application No. 202211044631.4, filed on August 30, 2022 and entitled "FLUOROPOLYMER AND PREPARATION METHOD AND USAGE THEREOF, POSITIVE ELECTRODE SLURRY, SECONDARY BATTERY, BATTERY MODULE, BATTERY PACK, AND ELECTRIC APPARATUS", CN Patent Application No. 202211052014.9, filed on August 30, 2022 and entitled "FLUOROPOLYMER AND PREPARATION METHOD AND USAGE THEREOF, POSITIVE ELECTRODE SLURRY, SECONDARY BATTERY, BATTERY MODULE, BATTERY PACK, AND ELECTRIC APPARATUS", CN Patent Application No. 202211046282.X, filed on August 30, 2022 and entitled "BINDER, PREPARATION METHOD, POSITIVE ELECTRODE PLATE, SECONDARY BATTERY, AND ELECTRIC APPARATUS", CN Patent Application No. 202211044756.7, filed on August 30, 2022 and entitled "BINDER, PREPARATION METHOD, POSITIVE ELECTRODE PLATE, SECONDARY BATTERY, AND ELECTRIC APPARATUS", and CN Patent Application No. 202211043966.4, filed on August 30, 2022 and entitled "BINDER, PREPARATION METHOD, POSITIVE ELECTRODE PLATE, SECONDARY BATTERY, AND ELECTRIC APPARATUS", which are incorporated herein by reference in their entirety.

### TECHNICAL FIELD

This application relates to the field of secondary battery technologies, and in particular, to a fluoropolymer, a preparation method, a binder composition, a positive electrode plate, a secondary battery, and an electric apparatus.

### BACKGROUND

In recent years, secondary batteries have been widely used in energy storage power supply systems such as hydroelectric, thermal, wind, and solar power plants, and many other fields including electric tools, electric bicycles, electric motorcycles, electric vehicles, military equipment, and aerospace. With the extensive application of secondary batteries, higher requirements are imposed on their cycling performance, service life, and the like.

As a commonly used material in secondary batteries, the binder is in great need at electrode plates, separators, packaging places, and the like of batteries. However, existing binders present low adhesion and often need to be added in large amounts to meet the adhesion force requirements of electrode plates. This hinders increasing the energy density of batteries. Therefore, the existing binders still need to be improved.

### SUMMARY

In view of the foregoing subject, this application is intended to provide a binder composition, where the binder composition has great adhesion force even when added in small amounts and features good processability.

To achieve the foregoing objectives, this application provides a binder composition. The binder composition includes a first fluoropolymer, a second fluoropolymer, and a third fluoropolymer, where a weight-average molecular weight of the first fluoropolymer is 3000000-10000000, a weight-average molecular weight of the second fluoropolymer is 600000-1100000, and a weight-average molecular weight of the third fluoropolymer is 5000-150000.

Even added in small amounts, this binder composition can ensure that the electrode plate has sufficient adhesion force, improving the cycling performance of a battery. In addition, this binder composition also has excellent flexibility and processability, further improving the safety and cycling performance of the battery.

In any embodiment, a mass percentage of the first fluoropolymer is 10%-86% based on total mass of the binder composition.

With the mass percentage of the first fluoropolymer controlled within an appropriate range, the binder composition has sufficient adhesion force so that the membrane will not fall off during battery cycling. In addition, a specified amount of first fluoropolymer can effectively reduce the amount of the binder composition used and increase the loading amount of an active material in the electrode plate.

In any embodiment, a mass percentage of the second fluoropolymer is 10%-86% based on the total mass of the binder composition.

The second fluoropolymer has a low weight-average molecular weight, which can effectively improve the crystallinity of the first fluoropolymer, improve the flexibility of the electrode plate, and reduce the battery cost.

In any embodiment, crystallinity of the binder composition is not higher than 40%, and is optionally 5%-40%.

Adding the second fluoropolymer and the third fluoropolymer to the first fluoropolymer can effectively reduce the crystallinity of the binder, and improve the flexibility of the electrode plate and processability of the slurry, improving

the cycling performance of the battery.

In any embodiment, the first fluoropolymer contains a structural unit derived from vinylidene fluoride.

In any embodiment, the first fluoropolymer further contains a structural unit represented by formula I,

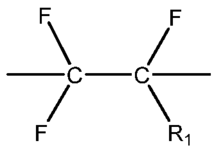 formula I

where $R_1$ includes one or more of hydrogen, fluorine, chlorine, and a $C_{1-3}$ alkyl group containing at least one fluorine atom.

In any embodiment, the first fluoropolymer includes one or more of polyvinylidene fluoride, vinylidene fluoride-chlorotrifluoroethylene copolymer, vinylidene fluoride-hexafluoropropylene copolymer, vinylidene fluoride-chlorotrifluoroethylene-hexafluoropropylene copolymer, vinylidene fluoride-tetrafluoroethylene-hexafluoropropylene copolymer, and vinylidene fluoride-chlorotrifluoroethylene-tetrafluoroethylene-hexafluoropropylene copolymer.

In any embodiment, the second fluoropolymer contains a structural unit represented by formula II,

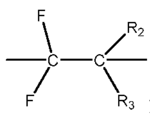 formula II

where $R_2$ and $R_3$ each independently include at least one of hydrogen, halogen, or a $C_{1-3}$ alkyl group containing at least one fluorine atom.

The second fluoropolymer contains chlorine.

The chlorine-containing second fluoropolymer can further reduce the crystallinity of the binder composition, improve the flexibility of the electrode plate, and improve the safety performance of the battery.

In any embodiment, a percentage of chlorine in the second fluoropolymer is not higher than 8% based on total mass of the second fluoropolymer.

The second fluoropolymer in which the percentage of chlorine is lower than 8% has low crystallinity. This can significantly improve the flexibility of the electrode plate.

In any embodiment, crystallinity of the second fluoropolymer is not higher than 47%, optionally not higher than 30%.

In any embodiment, the weight-average molecular weight of the second fluoropolymer is 600000-1100000.

In any embodiment, the second fluoropolymer includes at least one of polyvinylidene fluoride, chlorinated polyvinylidene fluoride, chlorinated poly(vinylidene fluoride-hexafluoropropylene), or poly(vinylidene fluoride-chlorotrifluoroethylene).

In any embodiment, the third fluoropolymer contains a structural unit represented by formula III,

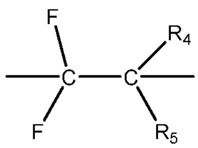 formula III

where $R_4$ and $R_5$ each independently include at least one of hydrogen, fluorine, chlorine, or trifluoromethyl.

In any embodiment, a terminal group of the third fluoropolymer contains a hydroxyl group or an ester group. In any embodiment, the third fluoropolymer includes one of polytetrafluoroethylene, polyvinylidene fluoride, poly(vinylidene fluoride-hexafluoropropylene) copolymer, poly(vinylidene fluoride-tetrafluoroethylene) copolymer, poly(vinylidene fluoride-chlorotrifluoroethylene) copolymer, or poly(vinylidene fluoride-chlorotrifluoroethylene) copolymer.

A second aspect of this application provides a fluoropolymer, where the fluoropolymer contains a structural unit derived from vinylidene fluoride and a structural unit represented by formula IV,

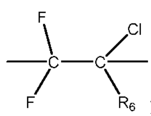 formula IV

where $R_6$ includes at least one of hydrogen, Cl, or F.

In any embodiment, a percentage of chlorine in the fluoropolymer is not higher than 8% based on total mass of the fluoropolymer.

In any embodiment, crystallinity of the fluoropolymer is not higher than 30%. In any embodiment, a weight-average molecular weight of the fluoropolymer is 600000-1100000.

In any embodiment, the fluoropolymer includes at least one of chlorinated polyvinylidene fluoride, chlorinated poly(vinylidene fluoride-hexafluoropropylene), or poly(vinylidene fluoride-chlorotrifluoroethylene).

A third aspect of this application provides a fluoropolymer preparation method, where the preparation method includes chlorinating polyvinylidene fluoride using a chlorinating agent to prepare a fluoropolymer.

In any embodiment, the preparation method specifically includes: dispersing polyvinylidene fluoride in a solvent to prepare a polyvinylidene fluoride suspension; and adding an initiator and the chlorinating agent to chlorinate polyvinylidene fluoride to prepare the fluoropolymer.

In any embodiment, the chlorinating agent includes at least one of chlorine, hydrogen chloride, phosphorus pentachloride, phosphorus trichloride, thionyl chloride $SO_2Cl_2$, or phosgene $COCl_2$.

In any embodiment, the initiator includes at least one of dibenzoyl peroxide, lauroyl peroxide, azodiisobutyronitrile (AIBN), or azodiisoheptanitrile (ABVN).

In any embodiment, the solvent includes at least one of carbon tetrachloride or water.

A fourth aspect of this application provides a positive electrode plate including a positive electrode current collector and a positive electrode film layer provided on at least one surface of the positive electrode current collector, where the positive electrode film layer includes a positive electrode active substance, a conductive agent, and the binder composition in any embodiment or a binder composition prepared using the preparation method in any embodiment.

This positive electrode plate has excellent adhesion force when the binder is added in small amounts.

In any embodiment, a mass fraction of the binder composition is not greater than 1.5%, and is optionally 0.8%-1.2%, based on total mass of the positive electrode film layer.

With the mass fraction of the binder composition controlled within an appropriate range, both flexibility and adhesion force of the electrode plate can be guaranteed, improving the cycling performance and safety performance of the battery.

In any embodiment, the positive electrode active substance is a lithium-containing transition metal oxide.

In any embodiment, the lithium-containing transition metal oxide is at least one of a lithium iron phosphate or lithium nickel cobalt manganese oxide, their materials modified by doping, or their materials modified by conductive carbon coating, modified by conductive metal coating, or modified by conductive polymer coating.

A fifth aspect of this application provides a secondary battery including an electrode assembly and an electrolyte, where the electrode assembly includes a separator, a negative electrode plate, and the positive electrode plate according to the fourth aspect of this application.

A sixth aspect of this application provides an electric apparatus including the secondary battery according to the fifth aspect of this application.

## BRIEF DESCRIPTION OF DRAWINGS

FIG. 1 is a schematic diagram of a secondary battery according to an embodiment of this application.
FIG. 2 is an exploded view of the secondary battery according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application shown in FIG. 4.
FIG. 6 is a schematic diagram of an electric apparatus using a secondary battery as a power source according to an embodiment of this application.

Reference signs:

1: battery pack; 2: upper box body; 3: lower box body; 4: battery module; 5: secondary battery; 51: housing; 52: electrode assembly; and 53: cover plate.

## DESCRIPTION OF EMBODIMENTS

The following specifically discloses embodiments of a positive electrode active material and a preparation method thereof, a positive electrode plate, a secondary battery, a battery module, a battery pack, and an electric apparatus

in this application, with proper reference to accompanying drawings. However, unnecessary detailed descriptions may be omitted. For example, detailed descriptions of well-known matters and repeated descriptions of actually identical structures have been omitted. This is to avoid an unnecessarily lengthy description below, for ease of understanding by persons skilled in the art. In addition, the accompanying drawings and the following descriptions are provided for persons skilled in the art to fully understand this application, instead of limiting the subject matter recorded in the claims.

"Ranges" disclosed in this application are defined by means of setting lower and upper limits. A given range is defined by selecting one lower limit and one upper limit, where the selected lower and upper limits define boundaries of a particular range. Ranges defined in this manner may or may not include end values, and any combinations may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Fluoropolymers are one of the binders most widely used in existing secondary batteries. However, conventional fluoropolymers feature low adhesion and always need to be added in large amounts to ensure effective adhesion of active substances, so as to provide electrode plates with effective adhesion. However, a larger amount of conventional fluoropolymer used will reduce the loading amount of active material in the electrode plate and affect the energy density increase of the battery. On the contrary, a small amount of binder can hardly maintain sufficient adhesion force during use, failing to meet the market needs for the cycling performance of the battery.

[Binder composition]

This application provides a binder composition. The binder composition includes a first fluoropolymer, a second fluoropolymer, and a third fluoropolymer, where a weight-average molecular weight of the first fluoropolymer is 3000000-10000000, a weight-average molecular weight of the second fluoropolymer is 600000-1100000, and a weight-average molecular weight of the third fluoropolymer is 5000-150000.

The term "binder composition" used herein refers to a mixture forming a colloidal solution or colloidal dispersant in a dispersion medium.

The term "fluoropolymer" used herein refers to a polymer where a fluorine-containing monomer serves as the main synthetic monomer. The polymer includes an aggregate of macromolecules prepared through polymerization reactions, which are uniform chemically but different in polymerization degree, molar mass, and chain length. The term further includes derivatives of macromolecular aggregates formed through polymerization reactions. To be specific, the polymers are chemically uniform or heterogeneous compounds that can be obtained through reactions of functional groups in the macromolecules, for example, addition or substitution. The fluoropolymers herein include both homopolymers and copolymers.

The term "weight-average molecular weight" used herein refers to a sum of products of weight fractions of molecules with different molecular weights in a polymer and their corresponding molecular weights.

In some embodiments, a dispersion medium of the binder composition is an oily solvent. An example of the

oily solvent includes but is not limited to dimethylacetamide, N,N-dimethylformamide, N-methylpyrrolidone, acetone, dimethyl carbonate, ethyl cellulose, and polycarbonate. That is, the binder is dissolved in the oily solvent.

In some embodiments, the binder composition is used to fix an electrode active substance and/or a conductive agent in appropriate positions and adhere them to a conductive metal component to form an electrode.

In some embodiments, the binder composition is used as a positive electrode binder for bonding the positive electrode active material and/or the conductive agent to form an electrode.

In some embodiments, the binder composition is used as a negative electrode binder for bonding a negative electrode active material and/or a conductive agent to form an electrode.

In some embodiments, the weight-average molecular weight of the first fluoropolymer is 3000000 to 10000000. In some embodiments, the weight-average molecular weight of the first fluoropolymer is 3000000, 3500000, 4000000, 4500000, 5000000, 5500000, 6000000, 6500000, 7000000, 7500000, 8000000, 8500000, 9000000, 9500000, 10000000, or any value therebetween.

In some embodiments, the weight-average molecular weight of the second fluoropolymer is 600000-1100000. In some embodiments, the weight-average molecular weight of the second fluoropolymer may optionally be 600000, 650000, 700000, 750000, 800000, 850000, 900000, 950000, 1000000, 1050000, 1100000, or any value therebetween.

In some embodiments, the weight-average molecular weight of the third fluoropolymer is 5000-150000. In some embodiments, the weight-average molecular weight of the second fluoropolymer may optionally be 5000, 10000, 20000, 30000, 40000, 50000, 60000, 70000, 80000, 90000, 100000, 110000, 120000, 130000, 140000, 150000, or any value therebetween.

In this application, the weight-average molecular weights of fluoropolymers may be tested using a method known in the art, for example, gel chromatography. To be specific, the Waters 2695 Isocratic HPLC gel chromatograph (differential refractometer 2141) is used for the tests. In some embodiments, the test method is using a polystyrene solution sample with a mass fraction of 3.0% as a reference and selecting a matching chromatographic column (oily: Styragel HT5DMF7.8*300 mm + Styragel HT4). A 3.0% colloidal binder solution is prepared using a purified N-methylpyrrolidone (NMP) solvent, and the prepared solution is left standing for one day. During test, a syringe is rinsed several times with tetrahydrofuran. Then, 5 ml of experimental solution is taken in to remove the air from the syringe, and the needle tip is dried. Finally, the sample solution is slowly injected into the sample inlet. When the reading is stable, the weight-average molecular weight is read.

With the weight-average molecular weight of 3000000-10000000, the first fluoropolymer added in small amounts can increase the adhesion force of the electrode plate and increase the capacity retention rate of the battery during cycling. The second fluoropolymer and the third fluoropolymer added at small molecular weights can effectively improve the processability of a slurry, improve the quality of the electrode plate, alleviate the brittleness problem of the electrode plate, and reduce the costs in manufacturing and raw materials. In addition, a uniform binder composition can further improve the cycling performance of the battery.

In some embodiments, a mass percentage of the first fluoropolymer is 10%-86% based on total mass of the binder composition.

In some embodiments, the mass percentage of the first fluoropolymer may optionally be 10%, 15%, 20%, 25%, 30%, 35%, 40%, 45%, 50%, 55%, 60%, 65%, 70%, 75%, 80%, 86%, or any value therebetween based on the total mass of the binder composition.

With the mass percentage of the first fluoropolymer controlled within an appropriate range, the binder composition has sufficient adhesion force so that the membrane will not fall off during battery cycling. In addition, a specified amount of first fluoropolymer can effectively reduce the amount of the binder composition used and increase the loading amount of an active material in the electrode plate.

In some embodiments, a mass percentage of the second fluoropolymer is 10%-86% based on the total mass of the binder composition.

In some embodiments, the mass percentage of the second fluoropolymer may optionally be 10%, 15%, 20%, 25%, 30%, 35%, 40%, 45%, 50%, 55%, 60%, 65%, 70%, 75%, 80%, 86%, or any value therebetween based on the total mass of the binder composition.

The second fluoropolymer has a low weight-average molecular weight, which can effectively improve the crystallinity of the first fluoropolymer, improve the flexibility of the electrode plate, and reduce the battery cost.

In some embodiments, crystallinity of the binder composition is not higher than 40%, optionally 5%-40%.

In some embodiments, the crystallinity of the binder composition may optionally be 40%, 35%, 30%, 25%, 20%, 15%, 10%, 5%, or any value therebetween.

The term "crystallinity" used herein refers to a proportion of crystalline regions in a polymer. A microstructure has some regions where molecules are arranged stably and regularly, and such regions with regularly and closely arranged molecules are called crystalline regions.

In this application, crystallinity may be tested using a method known in the art, for example, differential scanning calorimetry. In some embodiments, 0.5 g of binder composition is placed in an aluminum dry crucible and flattened by

shaking, and the crucible lid was put on. In a nitrogen atmosphere, purge gas and protective gas are introduced at 50 ml/min and 70 ml/min respectively. The temperature is raised at a speed of 10°C/min, and the test temperature range is -100°C to 400°C. Discovery 250 differential scanning calorimeter (DSC) of TA Instruments in the United States is used for the test and the thermal history is erased.

A DSC/(Mw/mg) curve of the binder composition as a function of the temperature will be obtained and integrated, the peak area is the enthalpy of fusion $\Delta H(J/g)$ of the fluoropolymer composition, and the crystallinity of the binder $=\Delta H/(\Delta Hm) \times 100\%$, where $\Delta Hm$ is the standard enthalpy of fusion (heat of fusion for crystalline) of the fluoropolymer, and $\Delta Hm=104.7$ J/g.

Adding the second fluoropolymer and the third fluoropolymer to the first fluoropolymer can effectively reduce the crystallinity of the binder, and improve the flexibility of the electrode plate and processability of the slurry, improving the cycling performance of the battery.

In some embodiments, the first fluoropolymer contains a structural unit derived from vinylidene fluoride. In some embodiments, the first fluoropolymer is a vinylidene fluoride homopolymer. In some embodiments, the first fluoropolymer is a vinylidene fluoride copolymer.

In some embodiments, the first fluoropolymer further contains a structural unit represented by formula I,

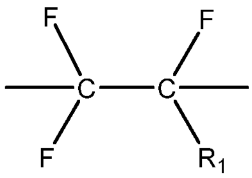 formula I

where $R_1$ includes one or more of hydrogen, fluorine, chlorine, and a $C_{1-3}$ alkyl group containing at least one fluorine atom.

In some embodiments, $R_1$ includes one or more of hydrogen, fluorine, chlorine, and trifluoromethyl.

In some embodiments, the first fluoropolymer includes one or more of polyvinylidene fluoride, vinylidene fluoride-chlorotrifluoroethylene copolymer, vinylidene fluoride-hexafluoropropylene copolymer, vinylidene fluoride-chlorotrifluoroethylene-hexafluoropropylene copolymer, vinylidene fluoride-tetrafluoroethylene-hexafluoropropylene copolymer, and vinylidene fluoride-chlorotrifluoroethylene-tetrafluoroethylene-hexafluoropropylene copolymer.

In some embodiments, the second fluoropolymer contains a structural unit represented by formula II,

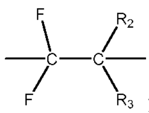 formula II

where $R_2$ and $R_3$ each independently include at least one of hydrogen, halogen, or a $C_{1-3}$ alkyl group containing at least one fluorine atom.

In some embodiments, $R_2$ and $R_3$ each independently include hydrogen, fluorine, chlorine, or trifluoromethyl.

In some embodiments, the second fluoropolymer contains chlorine.

The chlorine-containing second fluoropolymer can further reduce the crystallinity of the binder composition, improve the flexibility of the electrode plate, and improve the safety performance of the battery.

In some embodiments, the second fluoropolymer is prepared by chlorinating a fluoropolymer.

In some embodiments, the second fluoropolymer is prepared by copolymerizing a polyvinylidene fluoride monomer with a chlorine-containing monomer.

In some embodiments, a percentage of chlorine in the second fluoropolymer is not higher than 8% based on total mass of the second fluoropolymer. In some embodiments, the percentage of chlorine in the second fluoropolymer is 0.1%, 1%, 2%, 3%, 4%, 5%, 6%, 7%, 8%, or any value therebetween based on the total mass of the second fluoropolymer.

The second fluoropolymer in which the percentage of chlorine is lower than 8% has low crystallinity. This can significantly improve the flexibility of the electrode plate.

In some embodiments, crystallinity of the second fluoropolymer is not higher than 47%, optionally not higher than 30%. In some embodiments, the crystallinity of the second fluoropolymer is 47%, 45%, 40%, 35%, 30%, 25%, 20%, 15%, 10%, 5%, 4%, 3%, or any value therebetween. In some embodiments, the weight-average molecular weight of the second fluoropolymer is 600000-1100000. In some embodiments, the weight-average molecular weight of the second fluoropolymer is 600000, 700000, 800000, 900000, 1000000, 1100000, or any value therebetween.

In some embodiments, the second fluoropolymer includes at least one of polyvinylidene fluoride, chlorinated polyvinylidene fluoride, chlorinated poly(vinylidene fluoride-hexafluoropropylene), or poly(vinylidene fluoride-chlorotrifluoroethylene).

In some embodiments, the third fluoropolymer contains a structural unit represented by formula III,

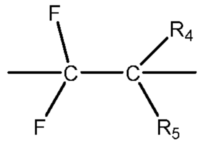

formula III

where $R_4$ and $R_5$ each independently include at least one of hydrogen, fluorine, chlorine, or trifluoromethyl.

In some embodiments, a terminal group of the third fluoropolymer contains a hydroxyl group or an ester group.

The third fluoropolymer has a low weight-average molecular weight, but the terminal group has a high mass percentage. Therefore, the terminal group greatly affects the properties of the third fluoropolymer. The terminal group of the third fluoropolymer contains a hydroxyl group or an ester group, effectively improving the adhesion of the third fluoropolymer. In this way, decrease in the adhesion property of the electrode plate caused by the added third fluoropolymer with a low molecular weight can be alleviated.

The terminal group structure of a polymer can be studied by nuclear magnetic resonance. The terminal group structure of a polymer can be analyzed using $^{19}$F-NMR and $^{1}$H-NMR. For example, dimethyl sulfoxide is used as a solvent, $CFCl_3$ as the standard for fluorine spectrum, and TMS as the standard for hydrogen spectrum.

In some embodiments, the third fluoropolymer includes one of polytetrafluoroethylene, polyvinylidene fluoride, poly(vinylidene fluoride-hexafluoropropylene) copolymer, poly(vinylidene fluoride-tetrafluoroethylene) copolymer, poly(vinylidene fluoride-chlorotrifluoroethylene) copolymer, or poly(vinylidene fluoride-chlorotrifluoroethylene) copolymer.

An embodiment of this application provides a fluoropolymer, where the fluoropolymer contains a structural unit derived from vinylidene fluoride and a structural unit represented by formula IV,

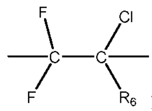

formula IV

where $R_6$ includes at least one of hydrogen, Cl, or F.

The chlorine-containing fluoropolymer can further reduce the crystallinity of the binder composition, improve the flexibility of the electrode plate, and improve the safety performance of the battery.

In some embodiments, the fluoropolymer is prepared by chlorinating a fluoropolymer.

In some embodiments, the fluoropolymer is prepared by copolymerizing vinylidene fluoride with a chlorine-containing monomer.

In some embodiments, a percentage of chlorine in the fluoropolymer is not higher than 8% based on total mass of the fluoropolymer. In some embodiments, the percentage of chlorine in the fluoropolymer is 0.1%, 1%, 2%, 3%, 4%, 5%, 6%, 7%, 8%, or any value therebetween based on the total mass of the fluoropolymer.

The fluoropolymer in which the percentage of chlorine is lower than 8% has low crystallinity. This can significantly improve the flexibility of the electrode plate.

In some embodiments, crystallinity of the fluoropolymer is not higher than 30%.

In some embodiments, the crystallinity of the fluoropolymer may optionally be 30%, 25%, 20%, 15%, 10%, 5%, or any value therebetween. In some embodiments, a weight-average molecular weight of the fluoropolymer is 600000-1100000. In some embodiments, the weight-average molecular weight of the fluoropolymer is 600000, 700000, 800000, 900000, 1000000, 1100000, or any value therebetween.

In some embodiments, the fluoropolymer includes at least one of polyvinylidene fluoride, chlorinated polyvinylidene fluoride, chlorinated poly(vinylidene fluoride-hexafluoropropylene), or poly(vinylidene fluoride-chlorotrifluoroethylene).

An embodiment of this application provides a fluoropolymer preparation method, where the preparation method includes chlorinating polyvinylidene fluoride using a chlorinating agent to prepare a fluoropolymer.

In some embodiments, the preparation method specifically includes: dispersing polyvinylidene fluoride in a solvent to prepare a polyvinylidene fluoride suspension; and adding an initiator and the chlorinating agent to chlorinate polyvinylidene fluoride to prepare the fluoropolymer.

In some embodiments, the chlorinating agent includes at least one of chlorine, phosphorus pentachloride ($PCl_5$), hydrogen chloride HCl, phosphorus trichloride $PCl_3$, thionyl chloride $SO_2Cl_2$, or phosgene COCh.

In some embodiments, the initiator includes at least one of dibenzoyl peroxide, lauroyl peroxide, azodiisobutyronitrile (AIBN), or azodiisoheptanitrile (ABVN).

In some embodiments, the solvent includes at least one of carbon tetrachloride or water.

An embodiment of this application provides a binder composition preparation method, specifically including the following steps:

preparing a first fluoropolymer: under a polymerization condition, subjecting a raw material containing vinylidene fluoride monomer to a first polymerization reaction to prepare the first fluoropolymer, where a weight-average molecular weight of the first fluoropolymer is 3000000 to 10000000;
preparing a third fluoropolymer: under a polymerization condition, performing a second polymerization reaction to prepare a second fluoropolymer, where a weight-average molecular weight of the third fluoropolymer is not greater than 600000; and
blending: blending the first fluoropolymer, the second fluoropolymer with a weight-average molecular weight of 600000-1100000, and the third fluoropolymer to prepare the binder composition.

The term "blending" used herein refers to a process in which two or more substances are made into a macroscopic homogeneous material under conditions such as a specified temperature and/or shear stress.

This binder preparation method is simple, environmentally friendly, cost-effective, and conducive to industrial production. In addition, the binder composition prepared using this method can guarantee both the flexibility of the electrode plate and the cycling performance of the battery even when added in small amounts, increasing the capacity retention rate of the battery during cycling.

In some embodiments, the synthesis step of the first fluoropolymer includes: in a non-reactive gas atmosphere, subjecting a raw material containing vinylidene fluoride monomer to a polymerization reaction for 6-10 hours at a reaction pressure of 6-8 MPa and a reaction temperature of 45°C-60°C; and adding a chain transfer agent, and when the pressure in the reaction system drops to 2-2.5 MPa, stopping the reaction, separating solid from liquid, and retaining the solid phase to prepare the first fluoropolymer.

In some embodiments, the synthesis step of the first fluoropolymer includes: providing a raw material containing vinylidene fluoride monomer and a reaction solvent, and performing a first-stage polymerization reaction to obtain a first product; performing a second-stage polymerization reaction on the first product in a water-insoluble gas atmosphere; and adding a chain transfer agent to perform a third-stage polymerization reaction to obtain the first fluoropolymer.

The first product may refer to a reaction solution obtained after the first-stage polymerization reaction or a product obtained by purifying the reaction solution after the first-stage polymerization reaction.

In some embodiments, multiple portions of the first product are mixed and undergo the second-stage polymerization reaction in a water-insoluble gas atmosphere. That is, the second-stage polymerization reaction is a polymerization of the first product. It can be understood that the multiple portions of the first product may be prepared simultaneously in multiple reactors or prepared one after another in one reactor. The uniformity of a polymerized product can be improved by performing synthesis for multiple times and in multiple stages.

Polyvinylidene fluoride with an ultra-high molecular weight can be prepared by using a multistage polymerization method. In this case, the binder can meet the adhesion force requirement of the electrode plate even when added in small amounts, helping increase the loading amount of the positive electrode active material in the electrode plate and increase the capacity retention rate of the battery during cycling. In addition, the first product is formed in the first-stage polymerization reaction, molecular chain segments with a target molecular weight are formed in the second-stage polymerization reaction, and the third-stage polymerization reaction is used to regulate the molecular weight of the polymer. This avoids the case that the uniformity of the weight-average molecular weight of polyvinylidene fluoride is compromised by an excessively high molecular weight, improving the uniformity of the product. Furthermore, multistage polymerization can increase the utilization rate of the reactor during preparation of polyvinylidene fluoride and save time, shortening the time of leaving polyvinylidene fluoride in the reactor. The production efficiency of polyvinylidene fluoride is further improved through cooperation of the first-stage polymerization, the second-stage polymerization, and the third-stage polymerization.

In some embodiments, a reaction temperature of the first-stage polymerization reaction is 45°C-60°C. In some embodiments, the reaction temperature of the first-stage polymerization reaction is optionally 45°C-50°C, 50°C-55°C, 55°C-60°C, or 45°C-55°C.

In some embodiments, reaction time of the first-stage polymerization reaction is 4-10 hours. In some embodiments, the reaction time of the first-stage polymerization reaction is optionally 4-5 hours, 5-6 hours, 6-7 hours, 7-8 hours, 8-9 hours, 9-10 hours, 4-6 hours, 6-8 hours, 8-10 hours, or 5-10 hours.

In some embodiments, initial polymerization pressure is 4-6 MPa. In some embodiments, the initial polymerization pressure is optionally 4-5 MPa or 5-6 MPa. In some embodiments, the initial polymerization pressure is higher than critical pressure of vinylidene fluoride.

In some embodiments, a reaction temperature of the second-stage polymerization reaction is 60°C-80°C. In some embodiments, the reaction temperature of the second-stage polymerization reaction is optionally 60°C-70°C or

70°C-80°C.

In some embodiments, reaction time of the second-stage polymerization reaction is 2-4 hours. In some embodiments, the reaction time of the second-stage polymerization reaction is optionally 2-3 hours or 3-4 hours.

In some embodiments, reaction pressure of the second-stage polymerization reaction is 6-8 Mpa. In some embodiments, the reaction pressure of the second-stage polymerization reaction is optionally 6-7 Mpa or 7-8 Mpa.

In some embodiments, reaction time of the third-stage polymerization reaction is 1-2 hours.

With the reaction pressure, reaction time, and reaction temperature of each polymerization stage controlled within appropriate ranges, the weight-average molecular weight of polyvinylidene fluoride can be increased, the uniformity of the weight-average molecular weights of the polymerized product can be controlled, the product can have a low polydispersity coefficient, and the property of the first polyvinylidene fluoride can be balanced. This provides the electrode plate with great adhesion force even when the binder is added in small amounts, and further increases the cycling capacity retention rate of the battery.

In some embodiments, the chain transfer agent includes one or more of cyclohexane, isopropanol, methanol, and acetone.

The water-insoluble gas refers to a gas with a gas solubility of less than 0.1 L. The gas solubility refers to a volume of gas dissolved in 1 L of water till a saturated state at 20°C under a gas pressure of $1.013 \times 10^5$ Pa. In some embodiments, the water-insoluble gas is one or more selected from a group consisting of nitrogen, oxygen, hydrogen, and methane.

In some embodiments, the amount of the chain transfer agent used is 1.5%-3% total mass of the vinylidene fluoride monomer. For example, the amount of the chain transfer agent used may alternatively be 2% or 2.5%.

Controlling the amount of the chain transfer agent used within an appropriate range allows the chain length of a polymer to be controlled, thereby obtaining a polymer with a molecular weight distributed uniformly within an appropriate range.

In some embodiments, the first-stage polymerization reaction includes the following steps:

adding an aqueous solvent and a dispersant into a container to remove oxygen from the reaction system;
adding a first initiator and a pH regulator into the container to adjust the pH value to 6.5-7, and then adding a vinylidene fluoride monomer until the pressure in the container reaches 4-6 MPa; and
stirring for 30-60 minutes and heating till 45°C-60°C to perform the first-stage polymerization reaction.

Before heating for a polymerization reaction, materials are mixed to uniformity. This can deepen the reaction and provide the prepared polymer with more uniform weight-average molecular weight, crystallinity, and particle size.

In some embodiments, during preparation of the first fluoropolymer, the amount of the aqueous solvent used is 2-8 times the total mass of the vinylidene fluoride monomer. For example, the amount of the solvent used may alternatively be 3, 4, 5, 6, or 7 times the total mass of the vinylidene fluoride monomer. In some embodiments, the aqueous solvent is deionized water.

In some embodiments, during preparation of the first fluoropolymer, the dispersant includes one or more of cellulose ether and polyvinyl alcohol.

In some embodiments, during preparation of the first fluoropolymer, the dispersant includes one or more of methyl cellulose ether and carboxyethyl cellulose ether.

In some embodiments, during preparation of the first fluoropolymer, the amount of the dispersant used is 0.1%-0.3% the total mass of the vinylidene fluoride monomer. For example, the amount of the dispersant used may alternatively be 0.2% the total mass of the vinylidene fluoride monomer.

In some embodiments, the first initiator is an organic peroxide.

In some embodiments, the first initiator includes one or more of tert-amyl peroxypivalate, tert-amyl peroxyvalerate, 2-ethyl peroxydicarbonate, diisopropyl peroxydicarbonate, and tert-butylperoxypivalate .

In some embodiments, during preparation of the first fluoropolymer, the amount of the first initiator used is 0.15%-1% the total mass of the vinylidene fluoride monomer. For example, the amount of the first initiator used may alternatively be 0.2%, 0.4%, 0.6% or 0.8% the mass of the vinylidene fluoride monomer.

In some embodiments, the pH regulator includes one or more of potassium carbonate, potassium bicarbonate, sodium carbonate, sodium bicarbonate, and ammonia water.

In some embodiments, the amount of the pH regulator used is 0.05%-0.2% the total mass of the vinylidene fluoride monomer. For example, the amount of the pH regulator used may alternatively be 0.1% or 0.15% the total mass of the vinylidene fluoride monomer.

In some embodiments, the preparation method of the third fluoropolymer specifically includes:
in a non-reactive gas atmosphere, subjecting at least one monomer represented by formula V to the second polymerization reaction for 0.5-8 hours at a reaction pressure of 0.1-5 MPa and a reaction temperature of 60-90°C, stopping the reaction, separating solid from liquid, and retaining solid phase to obtain the second fluoropolymer,

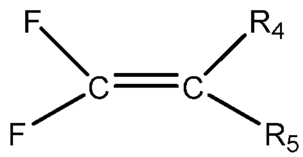

formula V

where $R_4$ and $R_5$ are each independently selected from hydrogen, halogen, or a $C_{1-3}$ alkyl group containing at least one fluorine atom.

In some embodiments, a reaction pressure of the second polymerization reaction is 0.1 MPa, 1 MPa, 2 MPa, 3 MPa, 4 MPa, 5 MPa, or any value therebetween.

In some embodiments, a reaction temperature of the second polymerization reaction is 60°C, 65°C, 70°C, 75°C, 80°C, 85°C, 90°C, or any value therebetween.

The polymerization reaction is performed at high temperatures under high pressure. This can improve the reaction efficiency, shorten the reaction time, increase the conversion rate of the reaction, and improve the product uniformity and purity.

In some embodiments, the second polymerization reaction further includes the following steps:

adding a solvent and a dispersant into a container, and filling the container with non-reactive gas; and
adding the monomer represented by formula III, heating till 60-90°C, and then adding a second initiator and a chain transfer agent.

In some embodiments, the second initiator contains an inorganic peroxide which may be selected from potassium persulfate or ammonium persulfate.

According to the results of nuclear magnetic resonance, when an inorganic peroxide is used as the initiator, the terminal group in the second fluoropolymer includes $-CF_2-CH_2OH$ or $-CF_2-CH_2OOCCH_3$. The existence of the hydroxyl group and ester group in the terminal group can effectively improve the adhesion of the second fluoropolymer and alleviate the decrease in the adhesion property of the binder composition caused by addition of the second fluoropolymer.

In some embodiments, a mass percentage of the initiator is 30/0-12% based on the total mass of the monomer represented by formula V.

High initiator content helps improve the reaction efficiency, shorten the reaction time, and improve the product uniformity.

In some embodiments, the chain transfer agent includes one or more of cyclohexane, isopropanol, methanol, and acetone.

[Positive electrode plate]

The positive electrode plate includes a positive electrode current collector and a positive electrode film layer provided on at least one surface of the positive electrode current collector. The positive electrode film layer includes a positive electrode active material, a conductive agent, and the binder composition in some embodiments.

This positive electrode plate has excellent adhesion force when the binder composition is added in small amounts.

In some embodiments, a mass fraction of the binder composition is not greater than 1.5%, and is optionally 0.8%-1.2%, based on total mass of the positive electrode film layer. In some embodiments, the mass percentage of the binder composition is 0.8%, 0.9%, 1.0%, 1.1%, 1.2%, 1.3%, 1.4%, 1.5%, or any value therebetween.

Even added in small amounts, the binder composition can effectively improve the adhesion property, flexibility, and processability of the electrode plate, improving the energy density and cycling performance of the battery.

In some embodiments, the positive electrode active material is a lithium-containing transition metal oxide.

In some embodiment, the positive electrode active material is at least one of a lithium iron phosphate or lithium nickel cobalt manganese oxide, their materials modified by doping, or their materials modified by conductive carbon coating, modified by conductive metal coating, or modified by conductive polymer coating.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a positive electrode active material for batteries well-known in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel cobalt aluminum oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), composite materials of lithium manganese phosphate and carbon, lithium manganese iron phosphate, and composite materials of lithium manganese iron phosphate and carbon.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

[Negative electrode plate]

The negative electrode plate includes a negative electrode current collector and a negative electrode film layer provided on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, a silicon-oxygen compound, a silicon-carbon composite, a silicon-nitrogen composite, or a silicon alloy. The tin-based material may be selected from at least one of elemental tin, a tin-oxygen compound, or a tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), or carboxymethyl chitosan (CMCS).

In some embodiments, the negative-electrode film layer further optionally includes a conductive agent. The conductive agent may be selected from at least one of superconducting carbon, acetylene black, carbon black, Ketjen black, carbon dots, carbon nanotubes, graphene, or carbon nanofiber.

In some embodiments, the negative electrode film layer further optionally includes other promoters such as a thickener (for example, sodium carboxymethyl cellulose (CMC-Na)).

In some embodiments, the negative electrode plate may be prepared in the following manner: the constituents

used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolyte salt may be selected from at least one of lithium hexafluorophosphate, lithium tetrafluoroborate, lithium perchlorate, lithium hexafluoroarsenate, lithium bis(trifluorosulfonyl)imide, lithium bistrifluoromethanesulfonimide, lithium trifluoromethanesulfonate, lithium difluorophosphate, lithium difluoro(oxalato)borate, lithium dioxalate borate, lithium difluoro(dioxalato)phosphate, or lithium tetrafluoro oxalato phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, or diethyl sulfone.

In some embodiments, the liquid electrolyte further optionally includes an additive. For example, the additive may include a negative electrode film-forming additive and a positive electrode film-forming additive, and may further include an additive capable of improving some performance of the battery, for example, an additive for improving overcharge performance of the battery and an additive for improving high-temperature performance or low-temperature performance of the battery.

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, or a fluoropolymer. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft bag, for example, a soft pouch. A material of the soft bag may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 1 shows a secondary battery 5 of a rectangular structure as an example.

In some embodiments, referring to FIG. 2, the outer package may include a housing 51 and a cover plate 53. The housing 51 may include a bottom plate and side plates connected to the bottom plate, and the bottom plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the secondary battery 5, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.
Optionally, the battery module 4 may further include a casing with an accommodating space, and the plurality of secondary batteries 5 are accommodated in the accommodating space.
In some embodiments, the battery module may be further assembled into a battery pack, and the battery pack may include one or more battery modules. The specific quantity may be chosen by persons skilled in the art according to use and capacity of the battery pack.
FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.
In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.
The secondary battery, the battery module, or the battery pack may be selected for the electric apparatus based on requirements for using the electric apparatus.
FIG. 6 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.
In another example, the apparatus may be a mobile phone, a tablet computer, a notebook computer, or the like. The apparatus is usually required to be light and thin, and a secondary battery may be used as a power source.

## Examples

The following describes examples of this application. The examples described below are illustrative and only used for explaining this application, and cannot be construed as limitations on this application. Examples in which technical solutions or conditions are not specified are made in accordance with technical solutions or conditions described in literature in the field or made in accordance with product instructions. The reagents or instruments used are all conventional products that are commercially available if no manufacturer is indicated.

Example 1

(1) Preparation of binder composition

Preparation of first fluoropolymer:

First-stage polymerization reaction: 4 kg of deionized water and 2 g of methyl cellulose ether were added into No.1 and No.2 10 L autoclaves, evacuation was performed and $O_2$was replaced with $N_2$ for three times, 5 g of tert-butylperoxypivalate and 2 g of sodium bicarbonate were added, 1 kg of vinylidene fluoride monomer was added to make the pressure reach 5 MPa, the mixture was stirred for 30 minutes and heated to 45°C for 4 hours of reaction.
Second-stage polymerization reaction: the reaction solution in No.1 and No.2 autoclaves was transferred to No.3 autoclave, nitrogen was introduced to make the pressure reach 7 MPa, and the solution was heated to 70°C and stirred for 3 hours of reaction.
Third-stage polymerization reaction: 40 g of cyclohexane was added for another 1 hour of reaction, and then the reaction was stopped. The reaction system was centrifuged, and the solid phase was collected, followed by washing and drying, to obtain the polyvinylidene fluoride binder.

Preparation of second fluoropolymer:

A specified amount of PVDF powder (commercially purchased) with a weight-average molecular weight of 1000000 and a reaction medium (carbon tetrachloride) were made into a suspension and added into a 500 ml three-

neck flask, $N_2$ was introduced in the course of stirring, the suspension was heated to 75°C (the temperature was controlled by a constant temperature water bath) and refluxed for 15 minutes, an initiator (5 g/L BPO was used as the initiator) was added, and a chlorinating agent (the chlorinating agent is $Cl_2$, with a flow rate of 170 mL/min) was added. HCl generated by the reaction was absorbed by water. The degree of PVDF chlorination was controlled by weighing the amount of HCl absorbed. After the reaction, nitrogen was introduced to remove the residual chlorine. The product was washed with alcohol and filtered, and then dried in vacuum to a constant weight. Finally, PVDF, in which the percentage of chlorine is around 8.0%, was obtained.

Preparation of third fluoropolymer:

219 g of deionized water and 0.1 g of hydroxypropyl methylcellulose were added into a 0.5 L autoclave, replacement with nitrogen was performed several times to remove oxygen, and then 120 g of vinylidene fluoride monomer gas was added. After the monomer was added, the reaction temperature was controlled at 82°C, the water-soluble ammonium persulfate initiator and 0.12 g of isopropanol chain transfer agent were added, and the reaction started, where the amount of initiator added was approximately 8% the total amount of the monomer added. The polymerization time was 1.5 hours and the pressure was maintained at 4.4 MPa. The product of the reaction was washed with water and dried to obtain the polyvinylidene fluoride polymer.

The first fluoropolymer, the second fluoropolymer, and the third fluoropolymer were blended at a mass ratio of 86:10:4 to obtain a binder composition containing the first fluoropolymer, the second vinylidene fluoride, and the third vinylidene fluoride.

The preparation methods used in Examples 2-9 were the same as that in Example 1, except that the mass ratio of fluoropolymers in the binder composition was adjusted. Details are shown in the table.

The preparation methods used in Examples 10-13 were the same as that in Example 3, except that the degree of PVDF chlorination was adjusted. Details are shown in the table.

The preparation method used in Example 14 was the same as that in Example 3, except that the second fluoropolymer was replaced with a (vinylidene fluoride-chlorotrifluoroethylene) copolymer.

The preparation method used in Comparative Example 1 was the same as that in Example 1, except that the binder composition only includes polyvinylidene fluoride with a weight-average molecular weight of 5000000.

The binder composition used in Examples 15-17 and 20 was the same as that used in Examples 10, 11, 3, and 12, and a battery was manufactured using this binder composition as a binder. The specific method was as follows.

(2) Preparation of positive electrode plate

Lithium iron phosphate, the binder composition, and acetylene black were put into a planetary mixer, and the mixture was stirred for 30 minutes at a revolution speed of 25 r/min, where a mass fraction of the binder composition was 1% based on the total mass of the positive electrode film layer.

2.4 kg of N-methylpyrrolidone (NMP) solution was added into the mixer, and the mixture was stirred for 70 minutes at a revolution speed of 25 r/min and a rotation speed of 900 r/min.

12.3 g of polyvinylpyrrolidone dispersant was added into the mixer, and the mixture was stirred for 60 minutes at a revolution speed of 25 r/min and a rotation speed of 1300 r/min.

After stirring, the viscosity of the slurry was tested. The viscosity should be controlled at 8000-15000 MPa s.

If the viscosity is higher, a N-methylpyrrolidone (NMP) solution is added until the viscosity falls within that range. After the NMP solution was added, the mixture was stirred for 30 minutes at a revolution speed of 25 r/min and a rotation speed of 1200-1500 r/min to obtain a positive electrode slurry. The prepared positive electrode slurry was applied onto carbon-coated aluminum foil, baked at 110°C for 15 minutes, and cold-pressed and then cut into discs with a diameter of 15 mm to obtain the positive electrode plate.

(3) Negative electrode plate

The metal lithium sheet was used as the negative electrode plate.

(4) Separator

A polypropylene film was used as the separator.

(5) Preparation of electrolyte

In an argon glove box ($H_2O$ < 0.1 ppm, $O_2$ < 0.1 ppm), organic solvents ethylene carbonate (EC) and ethyl

methyl carbonate (EMC) were mixed to uniformity at a volume ratio of 3/7, $LiPF_6$ lithium salt was added to the organic solvent, and the mixture was stirred well to prepare a 1 M $LiPF_6$ EC/EMC solution, so as to obtain the electrolyte.

(6) Preparation of battery

The positive electrode plate, negative electrode plate, separator, and electrolyte in Example 1 were assembled into a button battery in a button battery box.

The battery preparation methods used in Examples 18, 19, 21, and 22 were basically the same as that in Example 20, except that the amount of the binder composition used in the electrode plate was changed. Details are shown in the table.

The battery preparation methods used in Examples 23-26 were basically the same as that in Example 20, except that the ratio of fluoropolymers in the binder composition was changed. Details are shown in the table.

The battery preparation methods used in Examples 27-29 were basically the same as that in Example 20, except that the weight-average molecular weight of the third fluoropolymer was changed.

In Example 27, the preparation method of polyvinylidene fluoride with a weight-average molecular weight of 5000 included the following steps.

219 g of deionized water and 0.1 g of hydroxypropyl methylcellulose were added into a 0.5 L autoclave, replacement with nitrogen was performed several times to remove oxygen, and then 120 g of vinylidene fluoride monomer gas was added. After the monomer was added, the reaction temperature was controlled at 87°C, the water-soluble ammonium persulfate initiator and 0.15 g of isopropanol chain transfer agent were added, and the reaction started, where the amount of initiator added was approximately 8% the total amount of the monomer added. The polymerization time was 0.8 hours and the pressure was maintained at 4.4 MPa. The product of the reaction was washed with water and dried to obtain the polyvinylidene fluoride polymer.

In Example 28, the preparation method of polyvinylidene fluoride with a weight-average molecular weight of 20000 included the following steps.

219 g of deionized water and 0.1 g of hydroxypropyl methylcellulose were added into a 0.5 L autoclave, replacement with nitrogen was performed several times to remove oxygen, and then 120 g of vinylidene fluoride monomer gas was added. After the monomer was added, the reaction temperature was controlled at 83°C, the water-soluble ammonium persulfate initiator and 0.14 g of isopropanol chain transfer agent were added, and the reaction started, where the amount of initiator added was approximately 8% the total amount of the monomer added. The polymerization time was 1 hour and the pressure was maintained at 4.4 MPa. The product of the reaction was washed with water and dried to obtain the polyvinylidene fluoride polymer.

In Example 29, the preparation method of polyvinylidene fluoride with a weight-average molecular weight of 150000 included the following steps.

219 g of deionized water and 0.1 g of hydroxypropyl methylcellulose were added into a 0.5 L autoclave, replacement with nitrogen was performed several times to remove oxygen, and then 120 g of vinylidene fluoride monomer gas was added. After the monomer was added, the reaction temperature was controlled at 79°C, the water-soluble ammonium persulfate initiator and 0.12 g of isopropanol chain transfer agent were added, and the reaction started, where the amount of initiator added was approximately 7.0% the total amount of the monomer added, the polymerization time was 1.5 hours, and the pressure was maintained at 4.4 MPa. The product of the reaction was washed with water and dried to obtain the polyvinylidene fluoride polymer.

The battery preparation methods used in Examples 30 and 31 were basically the same as that in Example 20, except that the weight-average molecular weight of the second fluoropolymer was changed. All second fluoropolymers are commercially available.

The battery preparation methods used in Examples 32 and 33 were basically the same as that in Example 20, except that the weight-average molecular weight of the first fluoropolymer was changed.

In Example 32, the preparation method of polyvinylidene fluoride with a weight-average molecular weight of 3000000 was as follows.

4 kg of deionized water and 2 g of methyl cellulose ether were added into a 10 L autoclave, evacuation was performed and $O_2$ was replaced with $N_2$ for three times, 5 g of tert-butylperoxypivalate and 2 g of sodium bicarbonate were added, 1 kg of vinylidene fluoride monomer was added to make the pressure reach 7 MPa, and the mixture was stirred for 30 minutes and heated to 45°C for polymerization reaction. After 10 hours of polymerization reaction, 20 g of cyclohexane was added for continuing the reaction, and the reaction was stopped when the pressure in the reactor dropped to 2 MPa. The reaction system was centrifuged, and the solid phase was collected, followed by washing and drying, to obtain the polyvinylidene fluoride binder.

In Example 33, the preparation method of polyvinylidene fluoride with a weight-average molecular weight of 10000000 was as follows.

4 kg of deionized water and 2 g of methyl cellulose ether were added into a 10 L autoclave, evacuation and

replacement with $N_2$ were performed. The first-stage polymerization reaction: 4 kg of deionized water and 2 g of methyl cellulose ether were added into No.1 and No.2 10 L autoclaves, evacuation was performed and $O_2$ was replaced with $N_2$ for three times, 5 g of tert-butylperoxypivalate and 2 g of sodium bicarbonate were added, 1 kg of vinylidene fluoride monomer was added to make the pressure reach 5 MPa, and the mixture was stirred for 30 minutes and heated to 45°C for 9 hours of reaction.

Second-stage polymerization reaction: the reaction solution in No.1 and No.2 reactors was transferred to No.3 reactor, nitrogen was introduced to make the pressure reach 7 MPa, and the solution was heated to 70°C and stirred for 3 hours of reaction.

Third-stage polymerization reaction: 20 g of cyclohexane was added for another 1 hour of reaction, and then the reaction was stopped. The reaction system was centrifuged, and the solid phase was collected, followed by washing and drying, to obtain the polyvinylidene fluoride binder.

The battery preparation methods used in Examples 34 and 35 were basically the same as that in Example 20, except that a type of the second fluoropolymer was changed. The second fluoropolymer in Example 34 was a vinylidene fluoride-chlorotrifluoroethylene copolymer, but the second fluoropolymer in Example 35 was not chlorinated.

In Example 34, the preparation method of a vinylidene fluoride-chlorotrifluoroethylene copolymer was as follows.

0.8 g of benzoyl peroxide (BPO) was added into a 1 L autoclave containing 1, 1, 2-trifluorotrichloroethane (400 mL), and the autoclave was closed, cooled with a dry ice bath, and evacuated. 25 g of chlorotrifluoroethylene and then 420 g of vinylidene fluoride were introduced, and the autoclave was heated to room temperature and then to 45°C for 7.5 hours of reaction. Then, the autoclave was cooled to room temperature, the unreacted gas was driven out, and the autoclave was opened. The colorless precipitate was taken from the solution, and dried in a vacuum drying oven at 55°C for 8 hours to obtain the P(VDF-TrFE) copolymer.

The battery preparation method used in Example 36 was basically the same as that in Example 20, except that the first fluoropolymer in the binder composition was changed to the (vinylidene fluoride-hexafluoropropylene) copolymer and the third fluoropolymer was the (vinylidene fluoride-hexafluoropropylene) copolymer.

The preparation method of a (vinylidene fluoride-hexafluoropropylene) copolymer with a weight-average molecular weight of 5000000 was as follows.

First-stage polymerization reaction: 4 kg of deionized water and 2.5 g of methyl cellulose ether were added into No.1 and No.2 10 L autoclaves, evacuation was performed and $O_2$was replaced with $N_2$ for three times, 5 g of tert-butylperoxypivalate and 2 g of sodium bicarbonate were added, 0.94 kg of vinylidene fluoride and 0.06 kg of hexafluoropropylene were added to make the pressure reach 5 MPa, and the mixture was stirred for 30 minutes and heated to 45°C for 4 hours of reaction.

Second-stage polymerization reaction: the reaction solution in No. 1 and No.2 reactors was transferred to No.3 reactor, nitrogen was introduced to make the pressure reach 7 MPa, and the solution was heated to 70°C and stirred for 3 hours of reaction.

Third-stage polymerization reaction: 38 g of cyclohexane was added for another 1 hour of reaction, and then the reaction was stopped. The reaction system was centrifuged, and the solid phase was collected, followed by washing and drying, to obtain the vinylidene fluoride-chlorotrifluoroethylene copolymer binder.

The preparation method of a (vinylidene fluoride-hexafluoropropylene) copolymer with a weight-average molecular weight of 80000 was as follows.

219 g of deionized water and 0.1 g of hydroxypropyl methylcellulose were added into a 0.5 L autoclave, replacement with nitrogen was performed several times to remove oxygen, and then 100 g of vinylidene fluoride monomer gas and 11.9 g of hexafluoropropylene were added. After the monomer was added, the reaction temperature was controlled at 85°C. The water-soluble ammonium persulfate initiator and 0.12 g of isopropanol chain transfer agent were added, and the reaction started, where the amount of the initiator added was approximately 8% the total amount of the monomer. The polymerization time was 1 hour and the pressure was maintained at 4.6 MPa. The product of the reaction was washed with water and dried to obtain the second fluoropolymer.

The binder compositions in Comparative Examples 1-3 have different constituents. Details are shown in Table 1 and Table 2.

## II. Battery performance test

1. Polymer property test

(1) Test of weight-average molecular weight

Waters 2695 Isocratic HPLC gel chromatograph (differential refractometer 2141) was used. A polystyrene solution sample with a mass fraction of 3.0% was used as a reference and a matching chromatographic column (oily: Styragel HT5DMF7.8*300 mm + Styragel HT4) was selected. A 3.0% colloidal polymer solution was prepared using a

purified N-methylpyrrolidone (NMP) solvent, and the prepared solution was left standing for one day for later use. During test, a syringe was rinsed several times with tetrahydrofuran. Then, 5 ml of experimental solution was taken in to remove the air from the syringe, and the needle tip was dried. Finally, the sample solution was slowly injected into the sample inlet. When the reading is stable, the weight-average molecular weight is read.

(2) Crystallinity test

0.5 g of fluoropolymer was placed in an aluminum dry crucible and flattened by shaking, and the crucible lid was put on. In a nitrogen atmosphere, purge gas and protective gas were introduced at 50 ml/min and 70 ml/min respectively. The temperature was raised at a speed of 10°C/min, and the test temperature range was -100°C to 400°C. Discovery 250 differential scanning calorimeter (DSC) of TA Instruments in the United States was used for the test and the thermal history was erased.

A DSC/(Mw/mg) curve of the fluoropolymer as a function of the temperature would be obtained and integrated, the peak area was the enthalpy of fusion ΔH(J/g) of the fluoropolymer, and the crystallinity of the binder =ΔH/(ΔHm100%)* 100%, where ΔHm100% was the standard enthalpy of fusion (heat of fusion for crystalline) of the fluoropolymer, and ΔHm100%=104.7 J/g.

(3) Chlorine content test

The chlorine content of chlorinated PVDF was measured using an alkali fusion method, and the specific operation was as follows: 0.6 g (accurate to l mg) of crushed second fluoropolymer was put into a 40 ml porcelain crucible. A mixture of anhydrous sodium carbonate and potassium nitrate was spread on the bottom of the porcelain crucible, the sample was added, and then the mixture of anhydrous sodium carbonate and potassium nitrate was spread over the sample. A mass ratio of anhydrous sodium carbonate to potassium nitrate was 3:2 and both of them were chlorine-free reagents. Approximately 10 g of this mixture was used for each sample. The crucible filled with test materials was covered with a lid, but allowing gas to escape. The crucible was put into a muffle furnace, and the temperature was gradually raised to 600°C. Fusion lasted for about 4 hours until there was no odorless gas volatilizing. Heating was stopped when the product of fusion was uniform and contained no black particles. The crucible was taken out and cooled for a while, and then boiling water was added to dissolve the product. After cooling, the solution was transferred to a 250 ml volumetric flask and deionized water was added until the scale was reached. 5 ml of the solution was poured into a conical flask, 1 drop of bromophenol blue indicator was added, 5 drops of anhydrous ethanol were added, and the flash was shaken well. Concentrated nitric acid was first used to neutralize most of alkali, 0.2 ml/L nitric acid was added until bromophenol blue began to turn yellow, and then a few more drops were added until the pH value of the solution was 1.5-2. 5 drops of diphenyl carbazone solution were added and titrated with standard mercury nitrate solution. The color changed from yellowish red to magenta at the end. A blank experiment was made under the same conditions. Each of the foregoing samples was tested three times.

The mass fraction Cl% of chlorine was calculated using the equation below:

$$Cl\% = [(Vl - V2) \times C \times 35.46 \times 2/W] \times 100$$

where, V1 and V2 are volumes of standard mercury nitrate solution consumed by the titration sample and blank respectively, in units of mL, C is the concentration of standard mercury nitrate solution, in units of mol/l, and W is mass of the sample, in units of mg.

2. Slurry property test

(1) Slurry fluidity test

A proper amount of positive electrode slurry was fetched with a medicine spoon, and unforced flow of the positive electrode slurry was observed. If the unforced flow is smooth, it is determined that fluidity is OK. In the case of poor fluidity, the slurry appears like jelly and is clumped, meaning that gel appears. In this case, it is determined that fluidity is NG.

(2) Slurry filtration property test

A 500 ml beaker was placed under a 200-mesh sieve bracket, 500 ml of slurry was put onto the sieve for filtration, and the time when the volume of slurry in the beaker reaches 300 ml was recorded. Such a time is used to

measure the filtration property of the slurry. If the filtration time is shorter than 120s, it indicates that the filtration property of the slurry is OK; if the slurry fails to penetrate the sieve, it indicates that the filtration property of the slurry is NG.

3. Electrode plate performance test

(1) Adhesion force test

Referring to GB-T2790-1995 *180° Peel Strength Test Method for Adhesives,* the adhesion force test process used in the examples and comparative examples of this application is as follows.

Use a blade to cut the electrode plate to obtain a sample with a width of 30 mm and a length of 100-160 mm, and attach a special double-sided adhesive tape to a steel plate, where the adhesive tape is 20 mm wide and 90-150 mm long. Attach the positive electrode film layer of the obtained electrode plate sample to the double-sided adhesive tape, and then use a 2 kg press roller to roll the positive electrode film layer in the same direction for three times.

Attach a 250 mm-long paper tape with the same width as the electrode plate to the current collector of the electrode plate and fix it with crepe adhesive.

Power on a Sunstest tensile machine (with a sensitivity of 1 N), adjust the limiting block to a proper position after the indicator light is on, and use the lower clamp to fix an end of the steel plate with no electrode plate attached. Fold the paper tape upward and fix it with the upper clamp, and adjust the position of the upper clamp by pressing the "Up" and "Down" buttons on the manual controller for the tensile machine. Then, perform test and record the readings. The adhesion force of the electrode plate per unit length is obtained by dividing the force measured when the electrode plate stays balanced by the width of the adhesive tape, so as to represent the adhesive strength between the positive electrode film layer and the current collector.

(2) Determination of resistance of positive electrode film layer

The dried positive electrode slurry (film layer) at the left, middle, and right positions of the positive electrode plate was cut into small discs with a diameter of 3 mm. A resistance meter from Initial Energy Science&Technology was powered on, a disc was put in the appropriate position of the "probe" of the electrode plate resistance meter, the "Start" button was pressed, and the reading displayed stably was recorded. Two positions were tested for each disc. An average value of six measurements was calculated as the film layer resistance of the electrode plate.

(3) Electrode plate brittleness test

The positive electrode plate in the examples was cut into 20×100 mm test samples. The electrode plate was folded in half, fixed, and rolled once using a 2 kg press roller, and whether metal was exposed at the fold position of the electrode plate was observed. If no metal was exposed, the electrode plate was folded in half reversely, fixed, and rolled once using the 2 kg press roller, and whether metal was exposed at the fold position of the electrode plate was observed. The foregoing steps were repeated until metal is exposed at the fold position of the electrode plate. The fold count of the positive electrode plate upon metal exposure was recorded. Three groups were measured and an average value was calculated.

3. Battery performance test

(1) Battery capacity retention rate test

The process of testing the capacity retention rate of a battery is as follows: at 25°C, the button battery was charged to 3.65 V at a constant current of 1/3C, charged at a constant voltage of 3.65 V to a current of 0.05C, left standing for 5 minutes, and then discharged to 2.5 V at 1/3C. The capacity was recorded as the initial capacity C0. The foregoing steps were repeated on the same battery, and the discharge capacity Cn of the battery after the $n^{th}$ cycle was recorded. The battery capacity retention rate Pn=Cn/C0*100% after each cycle. With the 500 point values of P1, P2, ..., P500 as the vertical ordinates and the corresponding numbers of cycles as the horizontal ordinates, a curve graph of the capacity retention rate of the battery and the number of cycles was obtained.

In this test process, the first cycle corresponds to n=1, the second cycle to n=2, ..., and the $500^{th}$ cycle corresponds to n=500. In the table, the capacity retention rates of batteries in the examples and comparative examples were measured after 500 cycles under the foregoing test conditions, namely, the values of P500.

## III. Analysis of test results in examples and comparative examples

Batteries in the examples and comparative examples were prepared using the foregoing method, and performance parameters were measured. See Table 1 and Table 2 below for the results.

**Table 1**

| No. | First fluoropolymer | | Second fluoropolymer | | | | Third fluoropolymer | Binder composition | |
|---|---|---|---|---|---|---|---|---|---|
| | Type | Weight-average molecular weight ($\times 10^4$) | Type | Weight-average molecular weight ($\times 10^4$) | Chlorine content | Crystallinity | Weight-average molecular weight ($\times 10^4$) | Mass ratio of first fluoropolymer, second fluoropolymer, and third fluoropolymer | Crystallinity (%) |
| Example 1 | Polyvinylidene fluoride | 500 | Chlorinated polyvinylidene fluoride | 100 | 8% | 4.20% | 8 | 86:10:04 | 24.36% |
| Example 2 | Polyvinylidene fluoride | 500 | Chlorinated polyvinylidene fluoride | 100 | 8% | 4.20% | 8 | 76:20:04 | 20.53% |
| Example 3 | Polyvinylidene fluoride | 500 | Chlorinated polyvinylidene fluoride | 100 | 8% | 4.20% | 8 | 66:30:04 | 15.57% |
| Example 4 | Polyvinylidene fluoride | 500 | Chlorinated polyvinylidene fluoride | 100 | 8% | 4.20% | 8 | 56:40:04 | 14.04% |
| Example 5 | Polyvinylidene fluoride | 500 | Chlorinated polyvinylidene fluoride | 100 | 8% | 4.20% | 8 | 46:50:04 | 11.75% |
| Example 6 | Polyvinylidene fluoride | 500 | Chlorinated polyvinylidene fluoride | 100 | 8% | 4.20% | 8 | 36:60:4 | 10.22% |
| Example 7 | Polyvinylidene fluoride | 500 | Chlorinated polyvinylidene fluoride | 100 | 8% | 4.20% | 8 | 26:70:4 | 9.46% |
| Example 8 | Polyvinylidene fluoride | 500 | Chlorinated polyvinylidene fluoride | 100 | 8% | 4.20% | 8 | 16:80:4 | 7.16% |
| Example 9 | Polyvinylidene fluoride | 500 | Chlorinated polyvinylidene fluoride | 100 | 8% | 4.20% | 8 | 4:96:4 | 6.59% |
| Example 10 | Polyvinylidene fluoride | 500 | Chlorinated polyvinylidene fluoride | 100 | 1% | 35.13% | 8 | 66:30:04 | 29.89% |
| Example 11 | Polyvinylidene fluoride | 500 | Chlorinated polyvinylidene fluoride | 100 | 6% | 14.58% | 8 | 66:30:04 | 19.77% |
| Example 12 | Polyvinylidene fluoride | 500 | Chlorinated polyvinylidene fluoride | 100 | 4% | 25.60% | 8 | 66:30:04 | 24.74% |

(continued)

| No. | First fluoropolymer | | Second fluoropolymer | | | | Third fluoropolymer | Binder composition | |
|---|---|---|---|---|---|---|---|---|---|
| | Type | Weight-average molecular weight ($\times 10^4$) | Type | Weight-average molecular weight ($\times 10^4$) | Chlorine content | Crystallinity | Weight-average molecular weight ($\times 10^4$) | Mass ratio of first fluoropolymer, second fluoropolymer, and third fluoropolymer | Crystallinity (%) |
| Example 13 | Polyvinylidene fluoride | 500 | Polyvinylidene fluoride | 100 | 0% | 46.14% | 8 | 66:30:04 | 33.80% |
| Example 14 | Polyvinylidene fluoride | 500 | Poly(vinylidene fluoride-chlorotrifluoroethylene) | 100 | 8% | 28.70% | 8 | 66:30:04 | 27.60% |
| Comparative Example 1 | Polyvinylidene fluoride | 500 | / | / | / | / | / | 66:30:04 | 46.23% |

**Table 2**

| Examples | Binder composition | | | | | | | | | Positive electrode slurry | | Electrode plate | | | Battery |
|---|---|---|---|---|---|---|---|---|---|---|---|---|---|---|---|
| | First fluoropolymer | | Second fluoropolymer | | | Third fluoropolymer | | Binder composition | | | | | | | |
| | Type | Weight-average molecular weight ($\times 10^4$) | Type | Chlorine content | Weight-average molecular weight ($\times 10^4$) | Type | Weight-average molecular weight ($\times 10^4$) | Mass ratio of first fluoropolymer, second fluoropolymer, and third fluoropolymer | Mass fraction of binder composition | Fluidity | Filterability | Film layer resistance (Ω) | Fold count upon exposure | Adhesion force (N/m) | Capacity retention rate after 500 cycles |
| Example 15 | Polyvinylidene fluoride | 500 | Chlorinated polyvinylidene fluoride | 1% | 100 | Polyvinylidene fluoride | 8 | 66:30:04 | 1.00% | OK | OK | 0.52 | 1.7 | 19.2 | 85.20% |
| Example 16 | Polyvinylidene fluoride | 500 | Chlorinated polyvinylidene fluoride | 6% | 100 | Polyvinylidene fluoride | 8 | 66:30:04 | 1.00% | OK | OK | 0.48 | 3.3 | 17.4 | 85.30% |
| Example 17 | Polyvinylidene fluoride | 500 | Chlorinated polyvinylidene fluoride | 4% | 100 | Polyvinylidene fluoride | 8 | 66:30:04 | 1.00% | OK | OK | 0.49 | 2.7 | 18.6 | 85.20% |
| Example 18 | Polyvinylidene fluoride | 500 | Chlorinated polyvinylidene fluoride | 8% | 100 | Polyvinylidene fluoride | 8 | 66:30:04 | 0.80% | OK | OK | 0.55 | 2 | 13.5 | 83.80% |
| Example 19 | Polyvinylidene fluoride | 500 | Chlorinated polyvinylidene fluoride | 8% | 100 | Polyvinylidene fluoride | 8 | 66:30:04 | 0.90% | OK | OK | 0.49 | 3.33 | 15.2 | 85.30% |
| Example 20 | Polyvinylidene fluoride | 500 | Chlorinated polyvinylidene fluoride | 8% | 100 | Polyvinylidene fluoride | 8 | 66:30:04 | 1.00% | OK | OK | 0.43 | 5 | 16.6 | 85.60% |
| Example 21 | Polyvinylidene fluoride | 500 | Chlorinated polyvinylidene fluoride | 8% | 100 | Polyvinylidene fluoride | 8 | 66:30:04 | 1.10% | OK | OK | 0.45 | 4.33 | 17.1 | 85.00% |

(continued)

| Examples | Binder composition | | | | | | | | | Positive electrode slurry | | Electrode plate | | | Battery |
|---|---|---|---|---|---|---|---|---|---|---|---|---|---|---|---|
| | First fluoropolymer | | Second fluoropolymer | | | Third fluoropolymer | | Binder composition | | | | | | | |
| | Type | Weight-average molecular weight ($\times 10^4$) | Type | Chlorine content | Weight-average molecular weight ($\times 10^4$) | Type | Weight-average molecular weight ($\times 10^4$) | Mass ratio of first fluoropolymer, second fluoropolymer, and third fluoropolymer | Mass fraction of binder composition | Fluidity | Filterability | Film layer resistance (Ω) | Fold count upon exposure | Adhesion force (N/m) | Capacity retention rate after 500 cycles |
| Example 22 | Polyvinylidene fluoride | 500 | Chlorinated polyvinylidene fluoride | 8% | 100 | Polyvinylidene fluoride | 8 | 66:30:04 | 1.20% | OK | OK | 0.82 | 3 | 18 | 83.60% |
| Example 23 | Polyvinylidene fluoride | 500 | Chlorinated polyvinylidene fluoride | 8% | 100 | Polyvinylidene fluoride | 8 | 86:10:04 | 1.00% | OK | OK | 0.61 | 3.67 | 17.2 | 85.10% |
| Example 24 | Polyvinylidene fluoride | 500 | Chlorinated polyvinylidene fluoride | 8% | 100 | Polyvinylidene fluoride | 8 | 76:20:04 | 1.00% | OK | OK | 0.39 | 5 | 15.5 | 85.50% |
| Example 25 | Polyvinylidene fluoride | 500 | Chlorinated polyvinylidene fluoride | 8% | 100 | Polyvinylidene fluoride | 8 | 26:70:4 | 1.00% | OK | OK | 0.43 | 5 | 14.4 | 85.30% |
| Example 26 | Polyvinylidene fluoride | 500 | Chlorinated polyvinylidene fluoride | 8% | 100 | Polyvinylidene fluoride | 8 | 0.722269 | 1.00% | OK | OK | 0.52 | 5 | 16.7 | 84.30% |
| Example 27 | Polyvinylidene fluoride | 500 | Chlorinated polyvinylidene fluoride | 8% | 100 | Polyvinylidene fluoride | 0.5 | 66:30:04 | 1.00% | OK | OK | 0.65 | 4 | 11.2 | 83.60% |
| Example 28 | Polyvinylidene fluoride | 500 | Chlorinated polyvinylidene fluoride | 8% | 100 | Polyvinylidene fluoride | 2 | 66:30:04 | 1.00% | OK | OK | 0.57 | 5 | 15.4 | 85.10% |

(continued)

| Examples | Binder composition | | | | | | | | | Positive electrode slurry | | Electrode plate | | | Battery |
|---|---|---|---|---|---|---|---|---|---|---|---|---|---|---|---|
| | First fluoropolymer | | Second fluoropolymer | | | Third fluoropolymer | | Binder composition | | | | | | | |
| | Type | Weight-average molecular weight ($\times 10^4$) | Type | Chlorine content | Weight-average molecular weight ($\times 10^4$) | Type | Weight-average molecular weight ($\times 10^4$) | Mass ratio of first fluoropolymer, second fluoropolymer, and third fluoropolymer | Mass fraction of binder composition | Fluidity | Filterability | Film layer resistance (Ω) | Fold count upon exposure | Adhesion force (N/m) | Capacity retention rate after 500 cycles |
| Example 29 | Polyvinylidene fluoride | 500 | Chlorinated polyvinylidene fluoride | 8% | 100 | Polyvinylidene fluoride | 15 | 66:30:04 | 1.00% | OK | OK | 0.52 | 4.67 | 18.5 | 85.80% |
| Example 30 | Polyvinylidene fluoride | 500 | Chlorinated polyvinylidene fluoride | 8% | 60 | Polyvinylidene fluoride | 8 | 66:30:04 | 1.00% | OK | OK | 0.49 | 2 | 162 | 84.90% |
| Example 31 | Polyvinylidene fluoride | 500 | Chlorinated polyvinylidene fluoride | 8% | 110 | Polyvinylidene fluoride | 8 | 66:30:04 | 1.00% | OK | OK | 0.43 | 5 | 16.7 | 85.30% |
| Example 32 | Polyvinylidene fluoride | 300 | Chlorinated polyvinylidene fluoride | 8% | 100 | Polyvinylidene fluoride | 8 | 66:30:04 | 1.00% | OK | OK | 0.52 | 4.33 | 12.7 | 85.50% |
| Example 33 | Polyvinylidene fluoride | 1000 | Chlorinated polyvinylidene fluoride | 8% | 100 | Polyvinylidene fluoride | 8 | 66:30:04 | 1.00% | OK | OK | 0.49 | 5 | 20.6 | 85.60% |
| Example 34 | Polyvinylidene fluoride | 500 | Vinylidene fluoride-chlorotrifluoroethylene copolymer | 8% | 100 | Polyvinylidene fluoride | 8 | 66:30:04 | 1.00% | OK | OK | 0.48 | 3.3 | 15.2 | 85.10% |
| Example 35 | Polyvinylidene fluoride | 500 | Polyvinylidene fluoride | / | 100 | Polyvinylidene fluoride | 8 | 66:30:04 | 1.00% | OK | OK | 0.46 | 2.3 | 16.4 | 85.20% |

(continued)

| Examples | Binder composition | | | | | | | | | Positive electrode slurry | | Electrode plate | | | Battery |
|---|---|---|---|---|---|---|---|---|---|---|---|---|---|---|---|
| | First fluoropolymer | | Second fluoropolymer | | | Third fluoropolymer | | Binder composition | | | | | | | |
| | Type | Weight-average molecular weight ($\times 10^4$) | Type | Chlorine content | Weight-average molecular weight ($\times 10^4$) | Type | Weight-average molecular weight ($\times 10^4$) | Mass ratio of first fluoropolymer, second fluoropolymer, and third fluoropolymer | Mass fraction of binder composition | Fluidity | Filterability | Film layer resistance (Ω) | Fold count upon exposure | Adhesion force (N/m) | Capacity retention rate after 500 cycles |
| Example 36 | Poly(vinylidene fluoride-hexafluoropropylene) | 500 | Chlorinated polyvinylidene fluoride | 8% | 100 | Poly(vinylidene fluoride-hexafluoropropylene) | 8 | 66:30:04 | 1.00% | OK | OK | 0.46 | 2 | 14.3 | 84.40% |
| Comparative Example 1 | Polyvinylidene fluoride | 500 | / | / | / | / | / | / | 1.00% | NG | NG | 1.556 | 1 | 38.4 | 83.00% |
| Comparative Example 2 | Polyvinylidene fluoride | 500 | Polyvinylidene fluoride | / | 100 | / | / | 66:34:00 | 1.00% | NG | NG | 1.123 | 1.3 | 23.7 | 82.00% |
| Comparative Example 3 | / | / | Polyvinylidene fluoride | / | 100 | / | / | / | 2% | OK | OK | 1.105 | 1.3 | 12.1 | 83.00% |

As can be learned from comparison between Examples 1-14 and Comparative Example 1, the binder composition contains fluoropolymers with different weight-average molecular weights, which can reduce the crystallinity of the polymers. As can be learned from Examples 1-9, the crystallinity of the binder composition decreases as the percentage of the second fluoropolymer is increased. As can be learned from Examples 10-13, when the percentage of chlorine is 8%, the crystallinity of chlorinated polyvinylidene fluoride is merely 4.2% and basically in an amorphous state.

As can be learned from Example 14, the crystallinity of the binder composition can also be reduced when the (vinylidene fluoride-chlorotrifluoroethylene) copolymer is used as the second fluoropolymer. However, the crystallinity of the (vinylidene fluoride-chlorotrifluoroethylene) copolymer, in which the percentage of chlorine is 8%, is higher than that of chlorinated polyvinylidene fluoride.

As can be learned from comparison between Examples 15-36 and Comparative Examples 1-2, the binder composition can greatly reduce the amount of the fluoropolymers used. The binder composition containing the third fluoropolymer can effectively improve the processability of the slurry and the flexibility of the battery while providing great adhesion. Therefore, the cycling performance of the battery is optimized.

As can be learned by comparing Examples 15-17 and 20 with Examples 35 and 36, the addition of chlorinated second fluoropolymer can further improve the flexibility of polymers and make the electrode plate less prone to brittle fracture.

As can be learned from Examples 18-22, when the amount of the binder composition used is increased, the adhesion force of the electrode plate increases continuously, and flexibility and cycling capacity retention rate increase and then decrease.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A binder composition, **characterized in that** the binder composition comprises a first fluoropolymer, a second fluoropolymer, and a third fluoropolymer, wherein a weight-average molecular weight of the first fluoropolymer is 3000000-10000000, a weight-average molecular weight of the second fluoropolymer is 600000-1100000, and a weight-average molecular weight of the third fluoropolymer is 5000-150000.

2. The binder composition according to claim 1, **characterized in that** a mass percentage of the first fluoropolymer is 10%-86% based on total mass of the binder composition.

3. The binder composition according to claim 1 or 2, **characterized in that** a mass percentage of the second fluoropolymer is 10%-86% based on the total mass of the binder composition.

4. The binder composition according to any one of claims 1 to 3, **characterized in that** crystallinity of the binder composition is not higher than 40%, and is optionally 5%-40%.

5. The binder composition according to any one of claims 1 to 4, **characterized in that** the first fluoropolymer contains a structural unit derived from vinylidene fluoride.

6. The binder composition according to any one of claims 1 to 5, **characterized in that** the first fluoropolymer further contains a structural unit represented by formula I,

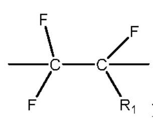 formula I

wherein $R_1$ comprises one or more of fluorine, chlorine, and a $C_{1-3}$ alkyl group containing at least one fluorine atom.

7. The binder composition according to any one of claims 1 to 6, **characterized in that** the first fluoropolymer comprises one or more of polyvinylidene fluoride, vinylidene fluoride-chlorotrifluoroethylene copolymer, vinylidene fluoride-hexafluoropropylene copolymer, vinylidene fluoride-chlorotrifluoroethylene-hexafluoropropylene copolymer, vinylidene fluoride-tetrafluoroethylene-hexafluoropropylene copolymer, and vinylidene fluoride-chlorotrifluoroethylene-tetrafluoroethylene-hexafluoropropylene copolymer.

**8.** The binder composition according to any one of claims 1 to 7, **characterized in that** the second fluoropolymer contains a structural unit represented by formula II,

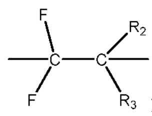 formula II

wherein $R_2$ and $R_3$ each independently comprise at least one of hydrogen, halogen, or a $C_{1-3}$ alkyl group containing at least one fluorine atom.

**9.** The binder composition according to any one of claims 1 to 8, **characterized in that** the second fluoropolymer contains chlorine.

**10.** The binder composition according to any one of claims 1 to 9, **characterized in that** a percentage of chlorine in the second fluoropolymer is not higher than 8% based on total mass of the second fluoropolymer.

**11.** The binder composition according to any one of claims 1 to 10, **characterized in that** crystallinity of the second fluoropolymer is not higher than 47%, optionally not higher than 30%.

**12.** The binder composition according to any one of claims 1 to 11, **characterized in that** the weight-average molecular weight of the second fluoropolymer is 600000-1100000.

**13.** The fluoropolymer according to any one of claims 1 to 12, **characterized in that** the second fluoropolymer comprises at least one of polyvinylidene fluoride, chlorinated polyvinylidene fluoride, chlorinated poly(vinylidene fluoride-hexafluoropropylene), or poly(vinylidene fluoride-chlorotrifluoroethylene).

**14.** The binder composition according to any one of claims 1 to 13, **characterized in that** the third fluoropolymer contains a structural unit represented by formula III,

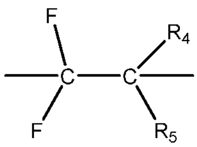 formula III

wherein $R_4$ and $R_5$ each independently comprise at least one of hydrogen, fluorine, chlorine, or trifluoromethyl.

**15.** The binder composition according to any one of claims 1 to 14, **characterized in that** a terminal group of the third fluoropolymer contains a hydroxyl group or an ester group.

**16.** The binder composition according to any one of claims 1 to 15, **characterized in that** the third fluoropolymer comprises one of polytetrafluoroethylene, polyvinylidene fluoride, poly(vinylidene fluoride-hexafluoropropylene) copolymer, poly(vinylidene fluoride-tetrafluoroethylene) copolymer, poly(vinylidene fluoride-chlorotrifluoroethylene) copolymer, or poly(vinylidene fluoride-chlorotrifluoroethylene) copolymer.

**17.** A fluoropolymer, **characterized in that** the fluoropolymer contains a structural unit derived from vinylidene fluoride and a structural unit represented by formula IV,

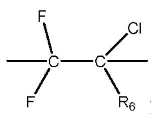 formula IV

wherein $R_6$ comprises at least one of hydrogen, Cl, or F.

**18.** The fluoropolymer according to claim 17, **characterized in that** a percentage of chlorine in the fluoropolymer is not higher than 8% based on total mass of the fluoropolymer.

**19.** The fluoropolymer according to claim 17 or 18, **characterized in that** crystallinity of the fluoropolymer is not higher than 30%.

**20.** The fluoropolymer according to any one of claims 17 to 19, **characterized in that** a weight-average molecular weight of the fluoropolymer is 600000-1100000.

**21.** The fluoropolymer according to any one of claims 17 to 20, **characterized in that** the fluoropolymer comprises at least one of chlorinated polyvinylidene fluoride, chlorinated poly(vinylidene fluoride-hexafluoropropylene), or poly(vinylidene fluoride-chlorotrifluoroethylene).

**22.** A fluoropolymer preparation method, **characterized in that** the preparation method comprises:
chlorinating polyvinylidene fluoride using a chlorinating agent to prepare a fluoropolymer.

**23.** The preparation method according to claim 22, **characterized in that** the preparation method specifically comprises:

dispersing polyvinylidene fluoride in a solvent to prepare a polyvinylidene fluoride suspension; and
adding an initiator and the chlorinating agent to chlorinate polyvinylidene fluoride to prepare the fluoropolymer.

**24.** The preparation method according to claim 22 or 23, **characterized in that** the chlorinating agent comprises at least one of chlorine, hydrogen chloride, phosphorus trichloride, sulfuryl chloride, or phosgene.

**25.** The preparation method according to any one of claims 22 to 24, **characterized in that** the initiator comprises at least one of dibenzoyl peroxide, lauroyl peroxide, azodiisobutyronitrile, or azodiisoheptanitrile.

**26.** A positive electrode plate comprising a positive electrode current collector and a positive electrode film layer provided on at least one surface of the positive electrode current collector, wherein the positive electrode film layer comprises a positive electrode active substance, a conductive agent, and the binder composition according to any one of claims 1 to 16.

**27.** The positive electrode plate according to claim 26, **characterized in that** a mass fraction of the binder composition is not greater than 1.5%, and is optionally 0.8%-1.2%, based on total mass of the positive electrode film layer.

**28.** The positive electrode plate according to claim 26 or 27, **characterized in that** the positive electrode active substance is a lithium-containing transition metal oxide, optionally at least one of a lithium iron phosphate or lithium nickel cobalt manganese oxide, their materials modified by doping, or their materials modified by conductive carbon coating, modified by conductive metal coating, or modified by conductive polymer coating.

**29.** A secondary battery, **characterized by** comprising an electrode assembly and an electrolyte, wherein the electrode assembly comprises a separator, a negative electrode plate, and the positive electrode plate according to any one of claims 26 to 28.

**30.** An electric apparatus, **characterized by** comprising the secondary battery according to claim 29.

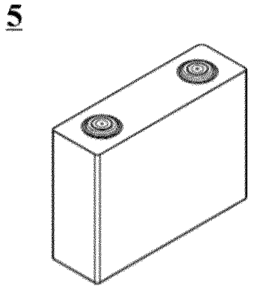


FIG. 1

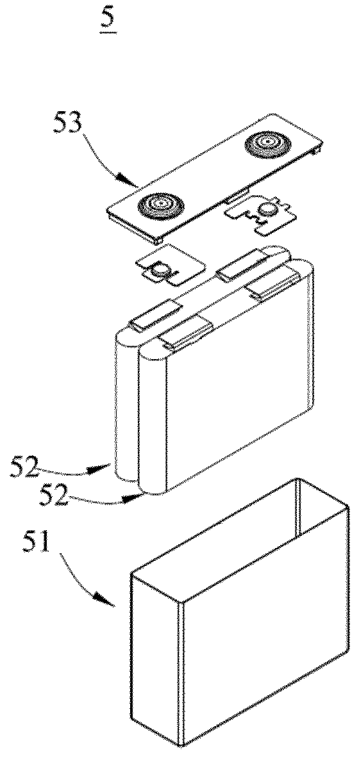


FIG. 2

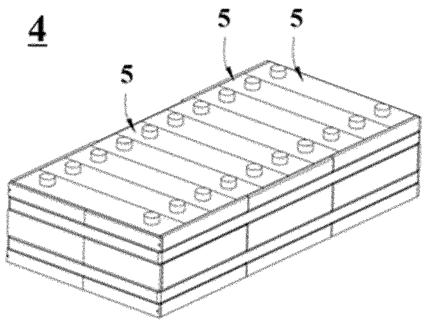


FIG. 3

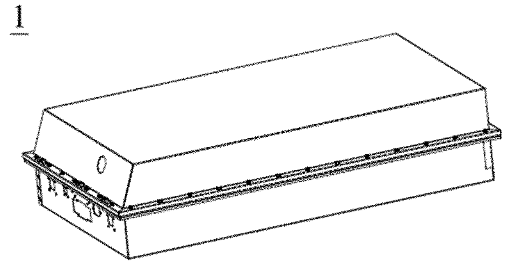


FIG. 4

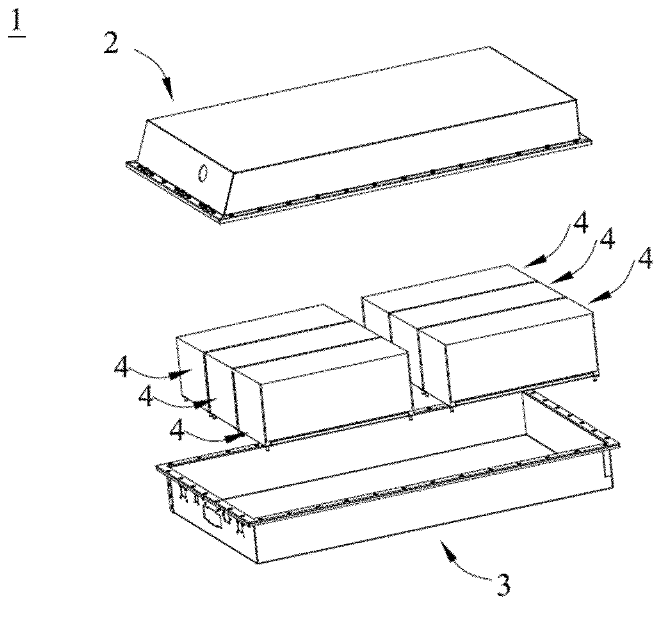


FIG. 5

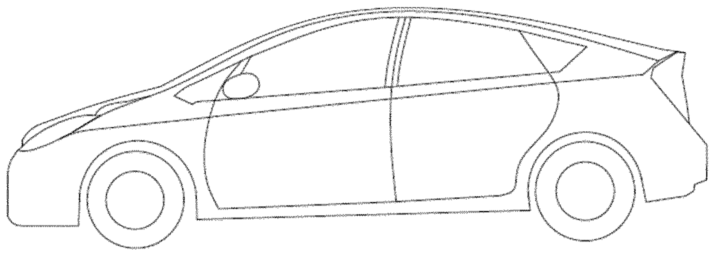

FIG. 6

**INTERNATIONAL SEARCH REPORT**

International application No.
**PCT/CN2023/088512**

**A. CLASSIFICATION OF SUBJECT MATTER**

C09J127/14(2006.01)i; C08F114/22(2006.01)i; C08F14/22(2006.01)i; C08F214/22(2006.01)i

According to International Patent Classification (IPC) or to both national classification and IPC

**B. FIELDS SEARCHED**

Minimum documentation searched (classification system followed by classification symbols)

IPC:C09J127/-; C08F14/-; C08F114/-; C08F214/-

Documentation searched other than minimum documentation to the extent that such documents are included in the fields searched

Electronic data base consulted during the international search (name of data base and, where practicable, search terms used)

CNABS; CNTXT; CNKI; DWPI; SIPOABS; ISI web of science: 发明人, 申请人, 偏二氟乙烯 or 偏氟乙烯 or vdf or pvdf or 聚偏二氟乙烯 or 聚偏氟乙烯, 重均分子量 or Mw, (vinylidene fluoride) or vdf or (polyvinylidene fluoride) or pvdf, (weight w average w molecular w weight) or (weight w average w molar w mass)

**C. DOCUMENTS CONSIDERED TO BE RELEVANT**

| Category* | Citation of document, with indication, where appropriate, of the relevant passages | Relevant to claim No. |
|---|---|---|
| X | CN 111194495 A (DAIKIN INDUSTRIES LTD.) 22 May 2020 (2020-05-22)<br>see description, paragraphs 0031-0149 and 0323 | 17-25 |
| A | CN 111194495 A (DAIKIN INDUSTRIES LTD.) 22 May 2020 (2020-05-22)<br>see description, paragraphs 0031-0149 and 0323 | 1-16, 26-30 |
| A | WO 2022114044 A1 (KUREHA CORP.) 02 June 2022 (2022-06-02)<br>see description, paragraphs 0002-0033 | 1-30 |
| X | CN 104053687 A (DAIKIN INDUSTRIES LTD.) 17 September 2014 (2014-09-17)<br>see description, paragraphs 0022-0201 | 17-25 |
| A | CN 104053687 A (DAIKIN INDUSTRIES LTD.) 17 September 2014 (2014-09-17)<br>see description, paragraphs 0022-0201 | 1-16, 26-30 |
| A | CN 103890998 A (TEIJIN LTD.) 25 June 2014 (2014-06-25)<br>see entire document | 1-30 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **18 July 2023** | **20 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**

International application No.
**PCT/CN2023/088512**

**C. DOCUMENTS CONSIDERED TO BE RELEVANT**

| Category* | Citation of document, with indication, where appropriate, of the relevant passages | Relevant to claim No. |
|---|---|---|
| A | CN 109929482 A (INDUSTRIAL TECHNOLOGY RESEARCH INSTITUTE) 25 June 2019 (2019-06-25)<br>see entire document | 1-30 |
| A | JP 2020113442 A (CARLIT HOLDINGS CO., LTD.) 27 July 2020 (2020-07-27)<br>see entire document | 1-30 |
| A | KR 20170129452 A (SAMSUNG SDI CO., LTD.) 27 November 2017 (2017-11-27)<br>see entire document | 1-30 |

Form PCT/ISA/210 (second sheet) (July 2022)

**INTERNATIONAL SEARCH REPORT**
**Information on patent family members**

International application No.
**PCT/CN2023/088512**

| Patent document cited in search report | Publication date (day/month/year) | Patent family member(s) | Publication date (day/month/year) |
|---|---|---|---|
| CN 111194495 A | 22 May 2020 | WO 2019087652 A1 | 09 May 2019 |
| | | TW 201923003 A | 16 June 2019 |
| | | TWI 753208 B | 21 January 2022 |
| | | KR 20200079516 A | 03 July 2020 |
| | | KR 102369813 B1 | 03 March 2022 |
| | | JPWO 2019087652 A1 | 09 July 2020 |
| | | JP 6863470 B2 | 21 April 2021 |
| | | US 2020243862 A1 | 30 July 2020 |
| | | EP 3680969 A1 | 15 July 2020 |
| | | EP 3680969 A4 | 31 March 2021 |
| WO 2022114044 A1 | 02 June 2022 | None | |
| CN 104053687 A | 17 September 2014 | JP 2013229337 A | 07 November 2013 |
| | | WO 2013111822 A1 | 01 August 2013 |
| | | JP 2013219016 A | 24 October 2013 |
| | | JP 5573980 B2 | 20 August 2014 |
| | | KR 20140112538 A | 23 September 2014 |
| | | KR 101599658 B1 | 03 March 2016 |
| | | US 2015017532 A1 | 15 January 2015 |
| | | US 9343744 B2 | 17 May 2016 |
| CN 103890998 A | 25 June 2014 | WO 2013058368 A1 | 25 April 2013 |
| | | TW 201332196 A | 01 August 2013 |
| | | TWI 553944 B | 11 October 2016 |
| | | KR 20140056390 A | 09 May 2014 |
| | | KR 101429579 B1 | 12 August 2014 |
| | | JP 5282181 B1 | 04 September 2013 |
| | | JPWO 2013058368 A1 | 02 April 2015 |
| | | US 2014308567 A1 | 16 October 2014 |
| | | US 9431638 B2 | 30 August 2016 |
| CN 109929482 A | 25 June 2019 | TWI 654269 B | 21 March 2019 |
| | | TW 201927974 A | 16 July 2019 |
| | | US 2019185723 A1 | 20 June 2019 |
| | | US 10428246 B2 | 01 October 2019 |
| JP 2020113442 A | 27 July 2020 | JP 7160696 B2 | 25 October 2022 |
| KR 20170129452 A | 27 November 2017 | KR 102162403 B1 | 06 October 2020 |
| | | JP 2017208338 A | 24 November 2017 |
| | | JP 7043183 B2 | 29 March 2022 |
| | | US 2017338460 A1 | 23 November 2017 |
| | | US 10707467 B2 | 07 July 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 2022099187 W
- CN 202211044631
- CN 202211052014
- CN 202211046282X
- CN 202211044756
- CN 202211043966